# EUROPEAN PATENT APPLICATION

(11) **EP 2 722 805 A1**
(43) Date of publication of application: **23.04.2014**
(21) Application number: 12382406.2
(22) Date of filing: 19.10.2012
(51) Int. Cl.: G06Q 30/02

(54) **A user-profiling method for providing advertisement data and/or online content to a user and a computer program**

(71) Applicant: Telefonica S.A., 28013 Madrid (ES); JaJah Ltd, Ra'Anana (IL)
(72) Inventor: Urdiales Delgado, Diego, 28013 Madrid (ES); Mullen, Nick, Ra'Anana (IL); Neystadt, John, Ra'Anana (IL)
(74) Representative: Gonzalez-Alberto Rodriguez, Natalia

(57) **Abstract**

A user-profiling method for providing advertisement data and/or online content to a user and a computer program.

In the user-profiling method a user provided with a computing device maintains a voice and/or a video communication with a second user through a communications provider, the method comprising:
receiving a profiling engine said voice and/or said video communication from said communications provider as an input;
processing said profiling engine, by means of an algorithm, a plurality of keywords related to data identifying a plurality of profiling parameters obtained from said voice or said video communication in order to obtain a user profile, and
providing data advertisement and/or online content to said user on the basis of said obtained user profile.

## Description

### Field of the art

The present invention generally relates to the field of mobile computing devices, and more particularly to a user-profiling method for providing advertisement data and/or online content to a user.

The invention also refers to a computer program that uses an algorithm for processing a plurality of keywords in order to implement said method.

### Prior State of the Art

The increasing usage of web and mobile devices and location-based services has increased the amount of data online, advertising or other content provided to users.

Many of this advertisements and content may be irrelevant and useless to the user. Moreover, the click-through ratio on the ads is constantly decreasing over the years, and sometimes it may be difficult to identify relevant or useful advertisements because of the high number of advertisements being received.

Some prior patent applications describe methods similar to the present invention. For instance US 20100169091, disclosing a *device, system and method for providing targeted advertisements and content.* This patent application, contrary to the present invention, focuses on playing voice ads and is based on speech to text conversion, which is too broad and does not include details on how they propose to do it. In general text to speech is a low accuracy technology that likely does not work well.

Another method for profiling users is the one used by Google® which profiles users based on the text of email messages.

However, no mechanism is known which uses voice conversations of users to obtain a user profile and further provide advertisements and online content on the basis of said user profile.

### Summary of the Invention

The object of the present invention is to provide a new mechanism to mine voice conversations of users, and create user profiles, which then can be used for advertising and other content targeting mechanisms.

To that end, the present invention relates, in a first aspect, to a user-profiling method for providing advertisement data and/or online content to a user, wherein a user provided with a computing device, i. e. a desktop computer, a tablet or a mobile phone, maintains a voice and/or a video communication with a second user through a communications provider.

The user-profiling method in a characteristic manner comprises:
receiving a profiling engine said voice and/or said video communication from said communications provider as an input;
processing said profiling engine, by means of an algorithm, a plurality of keywords related to data identifying a plurality of profiling parameters obtained from said voice or said video communication in order to obtain a user profile, and
providing data advertisement and/or online content to said user on the basis of said obtained user profile.

The processing includes sending a selected list of keywords of said plurality of keywords and the identity of said user by said profiling engine to a voice analysis engine.

Then, a voice analysis engine checks which keywords of said selected list of keywords are present in a further voice or video communication of said user and further returns said matching keywords to the profiling engine.

The identity of the user is extracted from a voice signaling of a signaling server.

In an embodiment, the profiling engine retrieves from a media server the voice media of said user recorded before said voice or said video communication. The recorded voice media can comprise any of a call recording, a plurality of voice mails and/or a plurality of voice messages, among any other voice data.

In another embodiment, the profiling engine stores every configurable period of time in a profile database the matching keywords in order to create said user profile.

The plurality of profiling parameters can be independent. Each of said profiling parameters has associated a number of potential values. In an embodiment, the values assigned to each potential values are exclusive and they usually consist of said user's gender, age, culture, family status and socio-economic level, among others.

The algorithm processed for obtaining said user profile can use a combination of one or more techniques. A first technique comprises processing the keywords of said plurality of keywords more frequently used by said user. A second technique comprises processing a plurality of phrases identifying said plurality of keywords. Yet another third technique comprises determining the accent and pitch or intonation of said user while he or she maintains said voice and/or said video communication.

Finally, the user-profiling method also takes into account using a plurality of keywords related to a second user receiving said voice and/or a video communication for obtaining said user profile.

A second aspect of the present invention, relates to a computer program product having computer-executable instructions for processing by means of an algorithm a plurality of keywords related to data identifying said user obtained from a voice or video communication, in order to provide advertisement data and/or online content to a user.

### Brief Description of the Drawings

The previous and other advantages and features will be more fully understood from the following detailed description of embodiments, with reference to the attached, which must be considered in an illustrative and non-limiting manner, in which:

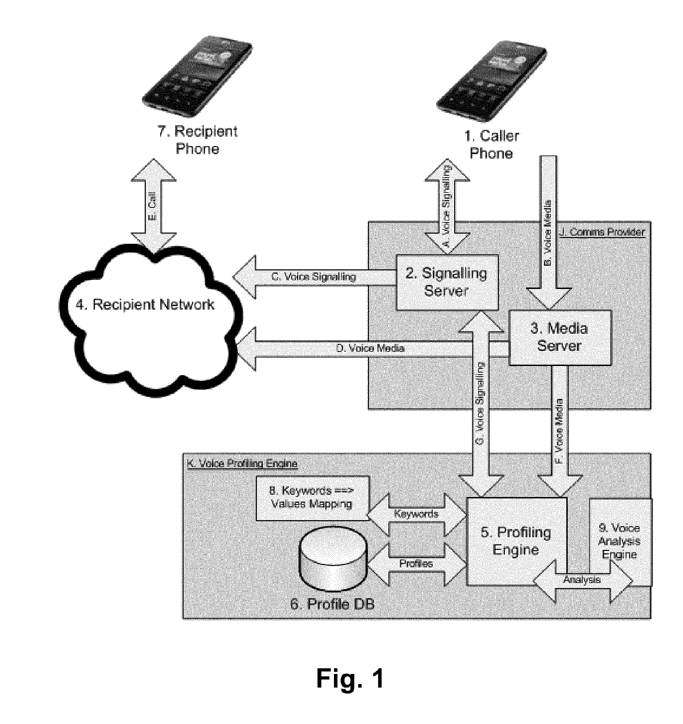

Figure 1 is a diagram showing an example of the online profiling mechanism used in the present invention.

### Detailed Description of Several Embodiments

The basic data needed for profiling people, that can be used for targeting ads, deals, coupons, consists of set of parameters, as can be seen in table 1, with a number of potential values for each.

**Table 1. Examples of parameters needed for profiling people, with example values.**

| **Parameter** | **Value** |
|---|---|
| Gender | **Female** |
| | **Male** |
| Age | **15-18** |
| | **18-25** |
| Culture | **British-English** |
| | **British-American** |
| Family Status | **Single** |
| | **Married** |
| Socio-Economic | **Upper Class** |
| | **Middle Class** |

Typically, parameters will be independent of each other, whereas values for each parameter will be exclusive.

Embodiments of the present invention to profile users use a combination of one or more techniques. These techniques are mainly:
● Frequency of typical keyword
● Phraseology based - unique phrases that identify the parameter
● Accent or pitch based

### Frequency of typical keyword:

Keyword based profiling: Several strategies can be used to derive profiling parameters from keywords:
- A basic strategy would be to establish a simple matching between keywords (K) and profiling parameter values (V), as depicted in the table 2. The likelihood that a user will fit into one of the values V can then be estimated as a count of keywords matching value V that the user utters, per time unit.

**Table 2. Example matching between Keywords (K) and profiling parameter values (V)**

| **Parameter** | **Value (V)** | **Keywords (K)** |
|---|---|---|
| Gender | Female | **Makeup** |
| | Male | **Soccer, girls, beer** |
| Age | 15-18 | **School, teacher** |
| | 18-25 | **College, exams,** ... |

- A second improved strategy would be to allocate a weight to each correspondence between a keyword K and a parameter value V. This variation allows for a more advanced computation of the fit, by not just counting how many times matching keywords are said, but adding their weights instead. Weights could be positive or negative, the latter case meaning a keyword could be indicative of the non-fit in one specific value V.

**Table 3. Weight allocation to each correspondence between a keyword (K) and a parameter value (V)**

| **Parameter** | **Value (V)** | **Keywords (K)** | **Weight** |
|---|---|---|---|
| Gender | Female | **Makeup** | **60** |
| | Male | **Soccer** | **25** |
| Age | 15-18 | **Teacher** | **40** |
| | | **Professor** | **-10** |

- A third improved strategy would be to allocate weights not only to single keywords, but also to keyword tuples. The computation then would not only add up all the weights of the relevant keywords detected for a user, but also include the weights of all relevant keyword tuples, thus serving as a correction mechanism:

**Table 4. Weight allocation to single and tuples keywords**

| **Parameter** | **Value** | **Keywords / Tuples** | **Weight** |
|---|---|---|---|
| Age | 15-18 | **Exam** | **40** |
| | | **University** | **30** |
| | | **(Exam, University)** | **-5** |
| | | **(University, Lecture)** | **-7** |

Also, strategies may also take into account not only the keywords uttered by the speaker him/herself, but also the keywords uttered by the other party (eventually, parties) in the communication (voice conversation and/or voice messaging), for instance by allocating different weights or probabilities to the keywords uttered by the other party. A simple such strategy would multiply each weight by a factor F (0 < F < 1) when the keyword is uttered by the other party instead of the user.

Online Profiling: Fig. 1 shows in an embodiment the online profiling logic. This profiling logic works in the following way:
When user (1) performs voice or video conversation with a recipient (7), telephony servers (2, 3) send a copy of media (F) and signaling (G) to Profiling Engine (5). Alternatively Profiling Engine (5) can retrieve voice media that was previously recorded (such as call recording, voice mails, or voice messages). Profiling Engine retrieves a list of keywords (8) and sends them to Voice Analysis Engine (9), together with identity of the speakers, extracted from signaling (G). Voice Analysis Engine (9) observes whether those keywords are present in the media and returns every match to profiling engine. Profiling Engine stores each indication of each keyword match in profile DB (6). Every configurable interval (e.g. 24h), Profiling Engine goes over the list of profiling parameters and calculates a matching score for each value, according to a strategy such as those described above, and to the confidence of matches of the keywords associated with that value, over a configurable period (e.g. 1 month) of time. A possible algorithm to include the confidence of the keyword detection in the score is to multiply the confidence times the weight associated to that keyword, so that low-confidence keywords have limited influence over the computed score. Another possible, slightly more elaborate algorithm to include the confidence of the keyword detection in the score is to dismiss the keyword if the detection confidence is under a certain threshold, and multiply the keyword weight by a factor X (0 < X < 1) whose value grows with the confidence value, if it is above the threshold. After the scores for each value have been computed, the value with the highest matching score (if above a minimum threshold) is selected and is stored in the profile DB for that parameter and can be used for targeting the user for advertising or deals offering.

Automated learning the profiling parameters: One option is to manually curate a table of profiling values and corresponding keywords. Another option is to derive the representative keywords automatically. A possible method for this is to rely on a representative control set of users, for which manual profiling was done and values were determined (e.g. male, Spanish, 25-30 years old).

The learning system, would then:
1. Collect voice recordings over a configurable time period by intercepting them online or collecting from an archive recorded in advance.
2. Transcribe each recording, manually or using one of the known voice to speech technologies.
3. Break each transcription into words, including linguistic stemming normalization (e.g. convert "went" and "going" into "go").
4. Calculate occurrence frequency for every word in the conversation (e.g. man - 10, woman - 9, beer - 2, soccer - 3, etc.).
5. And then either:
   a. For each parameter identify the top N keywords that uniquely correlate with the profiling parameter value, but not with other values for the same parameter, using one of machine learning algorithms, or just by picking 3 top keywords and saving it as a profiling table, associated with each value.
   b. Use the occurrence frequency to assign weights to each (profiling parameter value, keyword) tuple, so that keywords that are more frequent for users compliant with a certain value are assigned a higher weight.
6. A learning system can optionally allow manual overrides of the weights, including assignment of negative weights, to further fine-tune the profiling.

### Phraseology based:

Additional set of parameters can be determined based on phraseology which uniquely identifies a given parameter:

**Table 5. Additional parameters to be determined based on phraseology**

| **Parameter** | **Value** | **Phrase** |
|---|---|---|
| Culture | British-English | Biscuit |
| | | Car park |
| | | Chips |
| | British-American | Cookie parking lot |
| | | Fries |
| Family Status | Single | Meet for drinks |
| | Married | Looking after the kids |
| Socio-Economic | Upper Class | Frightfully |
| | Upper Class | Jolly good |
| | Middle Class | Sweets |
| | | Afters |

Phraseology based profiling works in the same way as keyword based, but a table with idioms needs to be preconfigured, and they are generally available in the dictionaries for each language, and cannot be determined with automated machine learning.

### Accent and Pitch based:

One of existing algorithms that determine speaker accent and pitch can be used to determine gender and culture of a speaker and populate them to the profile table. In any of the strategies described above, a keyword can be substituted by any other speech-related event computed by the same or other ad hoc ASR system, such as speaker accent, intonation or pitch, and assigned a weight or included in a tuple.

A person skilled in the art could introduce changes and modifications in the embodiments described without departing from the scope of the invention as it is defined in the attached claims.

## Claims

1. A user-profiling method for providing advertisement data and/or online content to a user, wherein a user provided with a computing device maintains a voice and/or a video communication with a second user through a communications provider, **characterized in that** the method comprises:
receiving a profiling engine said voice and/or said video communication from said communications provider as an input;
processing said profiling engine, by means of an algorithm, a plurality of keywords, related to data identifying a plurality of profiling parameters, obtained from said voice or said video communication in order to obtain a user profile, and
providing data advertisement and/or online content to said user on the basis of said obtained user profile.

2. The user-profiling method of claim 1, wherein said processing includes sending said profiling engine a selected list of keywords of said plurality of keywords and the identity of said user to a voice analysis engine.

3. The user-profiling method of claim 2, wherein said voice analysis engine comprises checking which keywords of said selected list of keywords sent to said voice analysis engine are present in a further voice or video communication of said user and further returning said matching keywords to said profiling engine.

4. A method according to claim 2, wherein said user identity is extracted from a voice signaling of a signaling server.

5. The user-profiling method of claim 1, wherein further comprising retrieving said profiling engine from a media server voice media of said user recorded before said voice or said video communication.

6. The user-profiling method of claim 5, wherein said recorded voice media comprises at least one of a call recording, a plurality of voice mails and/or a plurality of voice messages.

7. The user-profiling method of claim 2, further comprising storing said profiling engine in a profile database said matching keywords to obtain said user profile.

8. The user-profiling method of claim 7, wherein said storing is performed during a configurable period of time.

9. The user-profiling method of claim 1, wherein said plurality of profiling parameters are independent of each other, each one of said plurality of profiling parameters comprising having a plurality of potential values..

10. The user-profiling method of claim 9, comprising assigning an exclusive value to each one of said plurality of potential values.

11. The user-profiling method of claim 1, wherein said processing using said algorithm for obtaining said user profile comprises processing the keywords of said plurality of keywords more frequently used by said user.

12. The user-profiling method of claim 1, wherein said processing using said algorithm for obtaining said user profile comprises processing a plurality of phrases containing said plurality of keywords, and identifying them.

13. The user-profiling method of claim 1, wherein said processing using said algorithm for obtaining said user profile comprises processing words linked to the accent and/or pitch or intonation of said user while maintains said voice and/or said video communication.

14. The user-profiling method of previous claims, wherein it comprises further using a plurality of keywords related to a second user receiving said voice and/or a video communication for obtaining said user profile.

15. A computer program product having computer-executable instructions for processing by means of an algorithm a plurality of keywords, related to data identifying a plurality of profiling parameters, obtained from a voice or video communication, in order to provide data advertisement and/or online content to a user.
